# EUROPEAN PATENT APPLICATION

(11) **EP 3 680 507 A1**
(43) Date of publication of application: **15.07.2020**
(21) Application number: 19151312.6
(22) Date of filing: 11.01.2019
(51) Int. Cl.: F16F 1/02, B21C 37/04, C23C 2/06, C23C 2/26, C23C 2/32, F16F 1/04, C21D 8/06, C21D 9/02

(54) **METHOD FOR MAKING A SPRING**

(71) Applicant: NV Bekaert SA, 8550 Zwevegem (BE)
(72) Inventor: VERMEERSCH, Vincent, 9800 Deinze (BE); VANRANST, Philippe, 8500 Kortrijk (BE); VRAZIC, Igor, 91701 Trnava (SK); GHEKIERE, Pieter, 8587 Helkijn (BE); BUCKLEY, Rob, Doncaster, South Yorkshire DN11 9GD (GB)
(74) Representative: Messely, Marc

(57) **Abstract**

The method for making a spring comprises the steps of providing a metal coated steel wire and forming the metal coated steel wire into a spring shape. The metal coated steel wire has a rectangular cross section with rounded edges. The rectangular cross section comprises four flat sides connected by the rounded edges. The metal coated steel wire comprises a steel core having a rectangular cross section with rounded edges, wherein the rectangular cross section comprises four flat sides connected by the rounded edges. The steel core consists out of a steel alloy consisting out of between 0.35 and 1% by mass of C, between 0.1 and 0.3% by mass of Si, between 0.4 and 1.20% by mass of Mn, the balance being iron and unavoidable impurities. The metal coated steel wire is made by wire drawing. The steel core has a drawn perlitic microstructure. The metal coated steel wire comprises a metallic coating layer. The metallic coating layer comprises an intermetallic layer contacting the steel core. The metallic coating layer comprises a drawn microstructure. The mass of the metallic coating layer is between 10 and 120 g/m² of the surface of the metal coated steel wire. The shape of the metal coating layer conforms with the shape of the steel core on the rounded edges of the rectangular shape of the steel core.

## Description

### Technical Field

The invention relates to a method for making a spring using a coated steel wire; and to a spring made this way. The method involves forming the steel wire into the shape of the spring. The invention relates to coiled springs, e.g. helical springs or flat spiral springs as well as springs formed by bending steel wire into a permanently deformed shape. Such springs formed by bending steel wire into a permanently deformed shape can be used e.g. in bending or torsion mode.

### Background Art

For many applications springs made out of steel wire need to be corrosion resistant. In a known technology, a spring is formed from steel wire and the spring is post-coated with an appropriate polymer coating or with another coating, e.g. a coating comprising metal flakes in a binder. With post-coated is meant that the coating is applied after forming the steel wire into the spring.

It is also known to pre-coat the steel wire. With pre-coat is meant that a corrosion resistant coating is applied prior to forming the spring. Zinc or alloys comprising a high percentage of zinc are known coatings for pre-coating steel wire for springs.

Steel wires with rectangular or with square cross section can advantageously be used to produce helical springs because a spring can be made with better mechanical properties for the mass of steel wire used. DE202005006111U1 discloses such helical springs having a rectangular cross section, or even a more complex cross-section.

However, it is a challenge to provide a steel wire with rectangular or square cross section with a satisfactory pre-coating.

### Disclosure of Invention

The first aspect of the invention is a method for making a spring. The method comprises the steps of providing a metal coated steel wire; and forming the metal coated steel wire into a spring shape. The metal coated steel wire has a rectangular cross section with rounded edges. The rectangular cross section comprises four flat sides connected by the rounded edges. The metal coated steel wire comprises a steel core having a rectangular cross section with rounded edges, wherein the rectangular cross section comprises four flat sides connected by the rounded edges. The steel core consists out of a steel alloy consisting out of between 0.35 and 1% by mass of C, between 0.1 and 0.3% by mass of Si, between 0.4 and 1.20% by mass of Mn, the balance being iron and unavoidable impurities. The metal coated steel wire is made by wire drawing. The steel core has a drawn perlitic microstructure. The metal coated steel wire comprises a metallic coating layer. The metallic coating layer comprises an intermetallic layer contacting the steel core. The metallic coating layer comprises a drawn microstructure. The mass of the metallic coating layer is between 10 and 120 g/m² of the surface of the metal coated steel wire. The shape of the metal coating layer conforms with the shape of the steel core on the rounded edges of the rectangular shape of the steel core.

The invention has the benefit that a spring can be made in a very efficient way and which has long life time, even when operating in corrosive environments. The spring has excellent corrosion resistance properties as has been evidenced by salt spray tests. As the shape of the metal coating layer conforms with the shape of the steel core on the rounded edges of the rectangular shape of the steel core, effective and efficient forming (e.g. helical coiling for making a helical spring) of the wire into a spring is possible, and the wire - including the rounded edges of the wire - has excellent corrosion resistance. The conforming rounded edges provide an extended life time of the spring.

The metal coated steel wire is made via drawing a steel wire onto which a metallic coating has been applied by means of hot dipping at an intermediate stage in the drawing process, more particularly on a steel core having a round cross section. Hot dipping is applied on a steel core with round cross section and having a perlitic microstructure. Further drawing to the final dimensions and to the final cross sectional profile and shape is done on the steel wire after the metallic coating has been applied. This results in the steel core having a drawn perlitic microstructure (and not a rolled perlitic microstructure - a rolled perlitic microstructure is typical for a steel wire which has received its shaped cross section by means of rolling and not via drawing); and the metallic coating has a drawn microstructure. Drawing the metal coated steel wire to final dimension after applying the metallic coating in an intermediate process step allows to achieve a rather thin metallic coating layer. The shape of the metal coating layer conforms with the shape of the steel core on the rounded edges of the rectangular shape of the steel core. This is important to have proper processability of the metal coated steel wire in spring making and to achieve the required corrosion resistance also at the rounded edges of the metal coated steel wire.

Rolling the metal coated steel wire to its final cross-sectional dimensions does not result in a conforming shape of the metallic coating on the rounded edges of the steel wire. In the production of coated steel wires with rectangular or square cross section via rolling, the rolling operations (whether flat rolling or rolling with turks heads) disturb the metallic coatings at the edges of the rectangular cross section of the steel core, resulting in an uncontrolled metallic coating layer at the rounded edges of the metal coated steel wire. The result is that the coating flakes off at the rounded edges from the metal coated steel wire in coiling the spring, resulting in processing problems and in unsatisfactorily corrosion resistance of the spring.

Furthermore, when producing a rectangular or square wire via rolling (whether flat rolling or rolling with turks heads), the cross section of the steel core will show a so-called rolling cross. The rolling cross results from the strain paths present during rolling and consists of a highly deformed steel microstructure: the more highly deformed microstructure occurs in a diagonal orientation; and combination of the diagonals form the so called rolling cross. The presence of the rolling cross can be detected by appropriate metallographic preparation. When the metal coated steel wire is made via drawing, there is no rolling cross in the cross section of the metal core.

The wire drawing operations on the steel wire having a metallic coating layer provide the metallic coating layer with a redrawn microstructure which is easily distinguishable: the microstructure is a layered microstructure, the grains in the microstructure are elongated in the length direction of the metal coated steel wire. It is believed that this microstructure is beneficial for improved corrosion resistance of the metal coated steel wire. A metal coated steel wire made via rolling a previously coated steel wire has a different microstructure of the metallic coating layer: grains are compressed and not elongated; the positive effect on the corrosion resistance as seen in the drawn wire used in the invention is not achieved when the wire is made by means of rolling instead of drawing.

In a preferred method, a helical spring is made by helically coiling the metal coated steel wire into a helical spring.

In a preferred method, a formed spring is made by bending the metal coated steel wire into shape. Such formed spring part can be used in torsion or bending mode. Examples of formed springs are sinus springs, wire compression spring strips, flattened coil springs, flat spiral springs...

A preferred formed spring comprises a bend in the metal coated steel wire of at least 180° between the bent sections of the metal coated steel wire forming the spring part.

Preferably, the mass of the metallic coating layer is at least 30 g/m² - more preferably at least 60 g/m² - of the surface of the metal coated steel wire.

In a preferred embodiment, the mass of the metallic coating layer is between 30 and 60 g/m² -more preferably between 45 and 55 g/m² - of the surface of the metal coated steel wire

The intermetallic coating layer is formed in the hot dipping process in which the metallic coating layer is applied.

Preferably, the rectangular cross section with rounded edges is a square cross section.

Preferably, the metallic coating comprises at least 85% by weight of zinc and at least 4% by weight of aluminium. More preferably, the metallic coating layer consists out of Zn and Al.

Preferably, the metallic coating layer comprises at least 84% by mass of zinc; and between 9 and 16% by mass of aluminium.

Preferably, the metallic coating layer consists out of between 9 and 16% by mass of aluminium, the remainder being zinc, with the exception of some iron in the intermetallic coating layer of the metallic coating layer.

Preferably, the metallic coating layer comprises at least 93% by mass of zinc; and between 4 and 7% by mass of aluminium.

Preferably, the metallic coating layer consists out of between 4 and 7% by mass of aluminium, the remainder being zinc, with the exception of some iron in the intermetallic coating layer of the metallic coating layer.

Preferably, the metallic coating layer does not comprise Mg. It has been experienced that metallic coating layers comprising Zn and Al, but no Mg provide better corrosion resistance of springs made according to the method of the invention.

Preferably, the intermetallic coating layer comprises between 20 and 30% by mass of aluminium.

Preferably, the intermetallic coating layer provides between 40 and 65% of the thickness of the metallic coating layer. In embodiments of the invention the metallic coating layer is thin, resulting in it that the intermetallic coating layer is providing an important part of the thickness of the metallic coating layer: 40 to 65%. Such embodiments are preferred, as excellent processability of the metal coated steel wire is obtained combined with good corrosion resistance.

Preferably, the metal coated steel wire has a cross section less than 25 mm², preferably less than 12 mm².

The unavoidable impurities comprise e.g. less than 0.035% by mass of S, less than 0.035% by mass of P, less than 0.20% by mass of Cu. The mass percentages of the unavoidable impurities are calculated on the total mass of the steel alloy.

Preferably, the radius of the rounded edges of the metal coated steel wires is less than 0.35 mm for cross sections of the metal coated steel wire between 1 and 10 mm²; and the radius of the rounded edges of the metal coated steel wires is less than 0.5 mm for cross sections of the metal coated steel wire more than 10 mm².

Preferably, the four rounded edges of the metal coated steel wire each have the same shape and dimension.

Preferably, the metallic coating layer has the same microstructure around the full circumference of the steel core. It is meant that the metallic coating layer has the same microstructure at its rounded edges as along the flat sides of the cross section of the metallic coating layer.

Preferably, the height over the width of the metal coated steel wire is less than 3, preferably less than 2, more preferably less than 1.5. With height and width of the metal coated steel wire is meant respectively the shortest and the longest side of the rectangle of the rectangular cross section with rounded edges of the metal coated steel wire.

A second aspect of the invention is a helical coated steel wire spring or a formed spring. The helical coated steel wire spring or formed spring comprises a metal coated steel wire. The metal coated steel wire has a rectangular cross section with rounded edges. The rectangular cross section comprises four flat sides connected by the rounded edges. The metal coated steel wire comprises a steel core having a rectangular cross section with rounded edges, wherein the rectangular cross section comprises four flat sides connected by the rounded edges. The steel core consists out of a steel alloy consisting out of between 0.35 and 1% by mass of C, between 0.1 and 0.3% by mass of Si, between 0.4 and 1.20% by mass of Mn, the balance being iron and unavoidable impurities. The metal coated steel wire is made by wire drawing. The steel core has a drawn perlitic microstructure. The metal coated steel wire comprises a metallic coating layer. The metallic coating layer comprises an intermetallic layer contacting the steel core. The metallic coating layer comprises a drawn microstructure. The mass of the metallic coating layer is between 10 and 120 g/m² of the surface of the metal coated steel wire. The shape of the metal coating layer conforms with the shape of the steel core on the rounded edges of the rectangular shape of the steel core.

### Brief Description of Figures in the Drawings

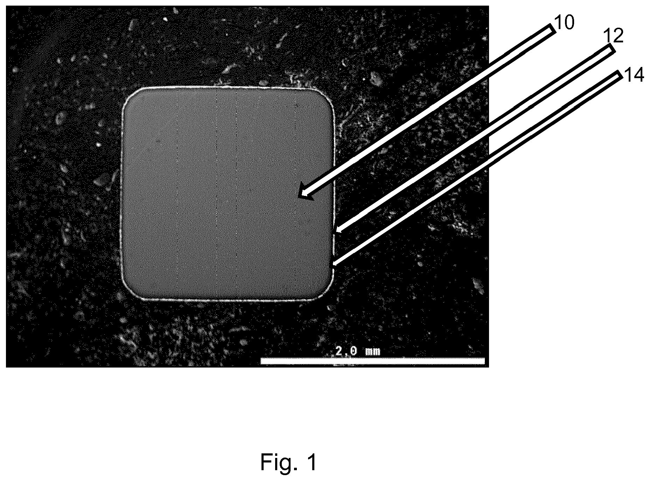

Figure 1 shows a photograph of a cross section of an example of a metal coated steel wire used in the invention.

### Mode(s) for Carrying Out the Invention

A helical spring has been made via helically coiling a metal coated steel wire. The metal coated steel wire has a square cross section of 1.9 mm by 1.9 mm with rounded edges. A photograph of the cross section of this metal coated steel wire is shown - against a black background - in figure 1. The rectangular cross section comprises four flat sides connected by the rounded edges. The metal coated steel wire comprises a steel core (10, figure 1) having a rectangular cross section with rounded edges, wherein the rectangular cross section comprises four flat sides connected by the rounded edges. The steel core consists out of a steel alloy consisting out of 0.83% by mass of C, 0.21% by mass of Si, 0.56% by mass of Mn, the balance being iron and unavoidable impurities. The metal coated steel wire comprises a metallic coating layer. In the example, the metallic coating layer (12, figure 1) comprises 95% by weight of zinc and 5% by weight of aluminium. No magnesium is present in the metallic coating layer of the example. The metal coated steel wire is made by wire drawing. The steel core has a drawn perlitic microstructure. The metallic coating layer comprises an intermetallic layer (14, figure 1) contacting the steel core. The metallic coating layer comprises a drawn microstructure. The mass of the metallic coating layer is 58 g/m² of the surface of the metal coated steel wire. The metallic coating layer is 8 µm thick. The shape of the metal coating layer conforms with the shape of the steel core on the rounded edges of the rectangular shape of the steel core.

The metal coated steel wire is made via drawing a steel wire onto which a metallic coating has been applied by means of hot dipping on a round wire at an intermediate stage in the drawing process, more specifically at 4.8 mm diameter, applying on this 4.8 mm diameter wire 130 g/m² of metal coating. Hot dipping is applied on a steel core having a perlitic microstructure. After applying the metal coating by means of hot dip, the steel wire is further drawn to its final dimensions and cross-sectional shape, involving profile drawing steps.

The intermetallic layer is 4 µm thick and comprises 25% by mass of aluminium.

The radius of the rounded edges of the metal coated steel wires is 0.26 mm.

The four rounded edges of the metal coated steel wire each have the same shape and dimension. The metallic coating layer has the same microstructure around the full circumference of the steel core.

Salt spray tests have been performed according to ASTM B117, the steel wires reached over 2000 hours.

## Claims

1. Method for making a spring, comprising the steps of
- providing a metal coated steel wire, and
- forming the metal coated steel wire into a spring shape;
wherein the metal coated steel wire has a rectangular cross section with rounded edges, wherein the rectangular cross section comprises four flat sides connected by the rounded edges,
wherein the metal coated steel wire comprises a steel core having a rectangular cross section with rounded edges, wherein the rectangular cross section comprises four flat sides connected by the rounded edges,
wherein the steel core consists out of a steel alloy consisting out of between 0.35 and 1% by mass of C, between 0.1 and 0.3% by mass of Si, between 0.4 and 1.20% by mass of Mn, the balance being iron and unavoidable impurities.;
wherein the metal coated steel wire is made by wire drawing; and wherein the steel core has a drawn perlitic microstructure,
wherein the metal coated steel wire comprises a metallic coating layer;
wherein the metallic coating layer comprises an intermetallic layer contacting the steel core; wherein the metallic coating layer comprises a drawn microstructure;
wherein the mass of the metallic coating layer is between 10 and 120 g/m² of the surface of the metal coated steel wire;
wherein the shape of the metal coating layer conforms with the shape of the steel core on the rounded edges of the rectangular shape of the steel core.

2. Method as in claim 1; wherein the rectangular cross section with rounded edges is a square cross section.

3. Method as in any of the preceding claims; wherein the metallic coating comprises at least 85% by weight of zinc and at least 4% by weight of aluminium.

4. Method as in claim 3, wherein the metallic coating layer comprises at least 84% by mass of zinc; and between 9 and 16% by mass of aluminium.

5. Method as in claim 3, wherein the metallic coating layer comprises at least 93% by mass of zinc; and between 4 and 7% by mass of aluminium.

6. Method as in any of the claims 3-5, wherein the metallic coating layer does not comprise Mg.

7. Method as in any of the claims 3 to 6; wherein the intermetallic coating layer comprises between 20 and 30% by mass of aluminium.

8. Method as in any of the preceding claims, wherein the intermetallic coating layer provides between 40% and 65% of the thickness of the metallic coating layer.

9. Method as in any of the preceding claims, wherein the metal coated steel wire has a cross section less than 25 mm², preferably less than 12 mm².

10. Method as in any of the preceding claims,
wherein the radius of the rounded edges of the metal coated steel wires is less than 0.35 mm for cross sections of the metal coated steel wire between 1 and 10 mm²; and
wherein the radius of the rounded edges of the metal coated steel wires is less than 0.5 mm for cross sections of the metal coated steel wire more than 10 mm².

11. Method as in any of the preceding claims, wherein the four rounded edges of the metal coated steel wire each have the same shape and dimension.

12. Method as in any of the preceding claims, wherein the metallic coating layer has the same microstructure around the full circumference of the steel core.

13. Method as in any of the preceding claims, wherein the height over the width of the metal coated steel wire is less than 3.

14. Helical coated steel wire spring or formed spring, wherein the helical coated steel wire spring or the formed spring comprises a metal coated steel wire,
wherein the metal coated steel wire has a rectangular cross section with rounded edges, wherein the rectangular cross section comprises four flat sides connected by the rounded edges,
wherein the metal coated steel wire comprises a steel core having a rectangular cross section with rounded edges, wherein the rectangular cross section comprises four flat sides connected by the rounded edges,
wherein the steel core consists out of a steel alloy consisting out of between 0.35 and 1 % by mass of C, between 0.1 and 0.3% by mass of Si, between 0.4 and 1.20% by mass of Mn, unavoidable impurities, and the balance being iron;
wherein the metal coated steel wire is made by wire drawing; and wherein the steel core has a drawn perlitic microstructure,
wherein the metal coated steel wire comprises a metallic coating layer;
wherein the metallic coating layer comprises an intermetallic layer contacting the steel core; wherein the metallic coating layer comprises a drawn microstructure;
wherein the mass of the metallic coating layer is between 10 and 120 g/m² of the surface of the metal coated steel wire;
wherein the shape of the metal coating layer conforms with the shape of the steel core on the rounded edges of the rectangular shape of the steel core.
